# EUROPEAN PATENT APPLICATION

(11) **EP 4 446 287 A1**
(43) Date of publication of application: **16.10.2024**
(21) Application number: 22904020.9
(22) Date of filing: 22.11.2022
(51) Int. Cl.: C03B 5/23, C03B 5/44

(54) **MOLTEN GLASS TRANSPORT DEVICE, GLASS ARTICLE MANUFACTURING DEVICE, AND GLASS ARTICLE MANUFACTURING METHOD**

(30) Priority: 07.12.2021 JP 2021198541
(71) Applicant: Nippon Electric Glass Co., Ltd., Otsu-shi, Shiga 520-8639 (JP)
(72) Inventor: TENYAMA, Kazuyuki, Otsu-shi, Shiga 520-8639 (JP)
(74) Representative: Tetzner, Michael
(86) International application number: PCT/JP2022/043173
(87) International publication number: WO 2023/106089

(57) **Abstract**

Provided is a molten glass transfer device (3), including: a transfer pipe (P) through which molten glass (Gm) flows; a retaining brick (14), which is arranged on an outer peripheral side of the transfer pipe (P), and retains the transfer pipe (P); and a casing (16), which accommodates the transfer pipe (P) and the retaining brick (14), and includes a space (15) defined by the retaining brick (14). A cooling device (18) configured to cool the casing (16) is provided.

## Description

### Technical Field

The present invention relates to a molten glass transfer device having a configuration in which a transfer pipe and a retaining brick for retaining the transfer pipe are accommodated inside a casing, an apparatus for manufacturing a glass article by using the transfer device, and a method of manufacturing a glass article by using the transfer device.

### Background Art

As is well known, in manufacture of a glass article such as a glass sheet or a glass pipe, molten glass is transferred from a melting furnace to a forming device by a molten glass transfer device. Transfer pipes are disposed in a transfer path for molten glass in the transfer device.

Main transfer pipes include transfer pipes that form a fining tank, a stirring tank, and a cooling pipe in the stated order from an upstream side of the transfer path. Further, there are also transfer pipes that form an upstream connection pipe provided between the melting furnace and the fining tank and a midstream connection pipe provided between the fining tank and the stirring tank.

In Patent Literature 1 (see FIG. 4 thereof), there is disclosed a specific example of a peripheral facility for those transfer pipes. This facility includes retaining bricks (electrocast bricks) and a casing (fastening means). The retaining bricks surround an outer peripheral side of the transfer pipe. The casing is arranged on an outer peripheral side of the retaining bricks with a space defined therebetween.

### Citation List

Patent Literature 1: JP 2016-88754 A

### Summary of Invention

### Technical Problem

Incidentally, in the field of manufacture of glass articles, molten glass that is transferred through the transfer pipe may be cooled so as to achieve a desired temperature or viscosity. Meanwhile, in order to improve productivity or the like, it is desired that a flow rate of the molten glass to be transferred through the transfer pipe be increased. For example, when the transfer pipe for cooling the molten glass is increased in length, the flow rate of the molten glass can be increased while ensuring required cooling capacity. However, the transfer device is increased in size, or facility costs are increased. In order to comply with a request for efficiently increasing the flow rate of the molten glass while ensuring required cooling capacity, it is effective to provide an appropriate configuration to the peripheral facility for the transfer pipe. However, the peripheral facility for the transfer pipe, which is disclosed in Patent Literature 1, reliably fastens the retaining bricks with the casing in order to stably manufacture a glass article, but cannot comply with the request for increasing the flow rate of the molten glass.

From the above-mentioned viewpoint, an object of the present invention is to efficiently increase a flow rate of molten glass while ensuring cooling capacity with use of a peripheral facility for a transfer pipe, which has an appropriate configuration.

### Solution to Problem

In order to solve the above-mentioned problem, according to a first aspect of the present invention, there is provided a molten glass transfer device, comprising: a transfer pipe through which molten glass flows; a retaining brick, which is arranged on an outer peripheral side of the transfer pipe, and retains the transfer pipe; and a casing, which accommodates the transfer pipe and the retaining brick, and includes a space defined by the retaining brick, wherein a cooling device configured to cool the casing is provided.

With the configuration described above, the casing is cooled by the cooling device. As a result, the retaining brick and the transfer pipe are cooled to thereby cool the molten glass inside the transfer pipe. Thus, cooling efficiency for the molten glass is improved, and time for achieving an appropriate viscosity for the molten glass (for example, a viscosity suitable for forming a glass article) is reduced. As a result, a flow rate of the molten glass that is transferred through the transfer pipe can be efficiently increased to thereby achieve, for example, improvement in productivity of glass articles. In addition, the space defined between the casing and the retaining brick is effectively used as a space for mitigating an influence of a change in outside temperature on the molten glass inside the transfer pipe. Further, the space is also effectively used as a space for uniformly cooling the retaining brick and the transfer pipe.

In this configuration, the cooling device may comprise a nozzle configured to eject cooling liquid to the casing.

In this manner, the cooling device can be used for a facility already comprising the casing as a peripheral facility for the transfer pipe. Thus, facility costs can be reduced. Further, a cooling effect with heat of vaporization is also obtained to thereby sufficiently enhance the cooling efficiency for the molten glass.

In this configuration, the cooling device may comprise a collecting device configured to collect the cooling liquid ejected to the casing.

In this manner, the cooling liquid can be used in a circulating manner. Thus, the amount of use of the cooling liquid can be reduced so as to prevent wasteful use of the cooling liquid.

In the configuration described above, the cooling device may comprise a cooling flow passage provided in the casing, through which the cooling liquid flows, and a liquid supply/discharge device configured to supply and discharge the cooling liquid to and from the cooling flow passage.

In this manner, the casing itself comprises the cooling flow passage through which the cooling liquid is supplied and discharged. Thus, the cooling efficiency for the molten glass can be further enhanced to thereby further efficiently increase the flow rate of the molten glass that is transferred through the transfer pipe.

In the configuration described above, the molten glass transfer device may further comprise a gas supply/discharge device configured to supply and discharge gas into and from the space.

In this manner, the retaining brick and the transfer pipe are cooled also with the gas that is supplied into and discharged from the space by the gas supply/discharge device to thereby cool the molten glass inside the transfer pipe. Thus, a synergistic effect in combination with cooling of the casing remarkably increases the cooling efficiency for the molten glass.

In order to solve the above-mentioned problem, according to a second aspect of the present invention, there is provided a manufacturing apparatus for manufacturing a glass article, the apparatus comprising a forming device configured to form a glass article from molten glass transferred by the molten glass transfer device described above.

With the configuration described above, the molten glass flowing at a flow rate increased through transfer by the molten glass transfer device is supplied to the forming device of the manufacturing apparatus, and a glass article is formed by the forming device. Thus, improvement in productivity of glass articles is achieved.

In order to solve the above-mentioned problem, according to a third aspect of the present invention, there is provided a method of manufacturing a glass article, the method comprising a forming step of forming a glass article from molten glass transferred by the molten glass transfer device described above.

With the configuration described above, the molten glass flowing at a flow rate increased through transfer by the molten glass transfer device is supplied to the forming step performed by the manufacturing apparatus, and a glass article is formed by carrying out the forming step. Thus, improvement in productivity of glass articles is achieved.

### Advantageous Effects of Invention

According to the present invention, the flow rate of the molten glass can be efficiently increased while ensuring cooling capacity with use of the peripheral facility for the transfer pipe, which has an appropriate configuration.

### Brief Description of Drawings

FIG. 1 is a side view for schematically illustrating an overall configuration of a molten glass transfer device and a manufacturing apparatus for a glass article according to an embodiment of the present invention.
FIG. 2 is a perspective view for illustrating a first example of a transfer pipe, which is a component of the molten glass transfer device and the manufacturing apparatus for a glass article according to the embodiment of the present invention.
FIG. 3 is a perspective view for illustrating a second example of the transfer pipe, which is a component of the molten glass transfer device and the manufacturing apparatus for a glass article according to the embodiment of the present invention.
FIG. 4 is a perspective view for illustrating a third example of the transfer pipe, which is a component of the molten glass transfer device and the manufacturing apparatus for a glass article according to the embodiment of the present invention.
FIG. 5 is a longitudinal sectional front view for illustrating a first example of a peripheral device for the transfer pipe, which is a component of the molten glass transfer device and the manufacturing apparatus for a glass article according to the embodiment of the present invention.
FIG. 6 is a longitudinal sectional front view for illustrating a second example of the peripheral device for the transfer pipe, which is a component of the molten glass transfer device and the manufacturing apparatus for a glass article according to the embodiment of the present invention.

### Description of Embodiments

In the following, a molten glass transfer device, a manufacturing apparatus for a glass article, and a method of manufacturing a glass article according to an embodiment of the present invention are described with reference to the accompanying drawings.

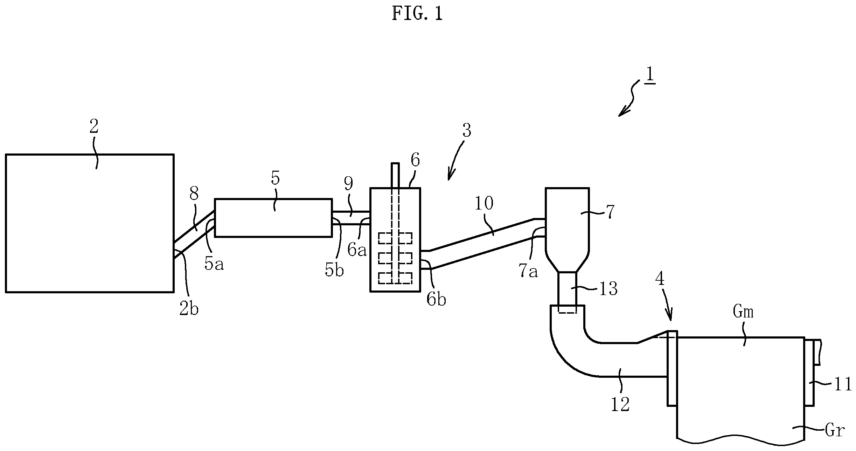

In FIG. 1, a manufacturing apparatus for a glass article according to the present invention is exemplified. As illustrated in FIG. 1, the manufacturing apparatus 1 roughly comprises a melting furnace 2, a molten glass transfer device (hereinafter, simply referred to as "transfer device") 3, and a forming device 4. The melting furnace 2 is arranged at an upstream end and is configured to heat a glass raw material so as to produce molten glass Gm. The transfer device 3 is configured to transfer the molten glass Gm flowing out of the melting furnace 2 to a downstream side. The forming device 4 is configured to form glass ribbon Gr by using the molten glass Gm supplied from the transfer device 3.

The transfer device 3 comprises a fining tank 5, a stirring tank 6, and a state adjusting tank 7, which are provided in the stated order from an upstream side. An inflow portion 5a of the fining tank 5 communicates with an outflow portion 2b of the melting furnace 2 through an upstream connection pipe 8. An outflow portion 5b of the fining tank 5 communicates with an inflow portion 6a of the stirring tank 6 through a midstream connection pipe 9. An outflow portion 6b of the stirring tank 6 communicates with an inflow portion 7a of the state adjusting tank 7 through a cooling pipe 10.

The fining tank 5 is configured to allow the molten glass Gm produced in the melting furnace 2 to be subjected to a fining treatment. The stirring tank 6 is configured to allow the molten glass Gm to be subjected to a homogenization treatment performed by stirring the molten glass Gm that has been subjected to the fining treatment. The cooling pipe 10 is configured to cool the molten glass Gm that has been subjected to the homogenization treatment so as to adjust, for example, a viscosity or a flow rate of the molten glass Gm. The state adjusting tank 7 is configured to further adjust, for example, the viscosity or the flow rate of the molten glass Gm that has been cooled. A plurality of stirring tanks 6 may be arranged in a transfer path in the transfer device 3.

The forming device 4 comprises a forming body 11 and an introduction pipe 12. The forming body 11 is configured to allow the molten glass Gm to flow down thereon so as to form the molten glass Gm into a band-like shape by an overflow downdraw method. The introduction pipe 12 has a large diameter and is configured to introduce the molten glass Gm to the forming body 11. The molten glass Gm is supplied into the introduction pipe 12 through a small-diameter pipe 13 of the state adjusting tank 7 of the transfer device 3.

The glass ribbon Gr formed into a band-like shape is subjected to an annealing step and a cutting step where a glass sheet having desired dimensions is cut out as a glass article. A resultant glass sheet has a thickness of, for example, from 0.01 mm to 2 mm and is used as a glass substrate or cover glass for a display such as a liquid crystal display or an OLED display. The forming device 4 may use other downdraw methods such as a slot downdraw method or may use a method other than downdraw methods, for example, a float method.

Silicate glass or silica glass is used as glass for the glass sheet. Preferably, borosilicate glass, soda-lime glass, aluminosilicate glass, or chemically strengthened glass is used. Most preferably, alkali-free glass is used. In this case, alkali-free glass refers to glass containing substantially no alkali component (alkali metal oxide), more specifically, glass containing an alkali component at a weight ratio of 3,000 ppm or less. The weight ratio of an alkali component in the present invention is preferably 1,000 ppm or less, more preferably 500 ppm or less, most preferably 300 ppm or less.

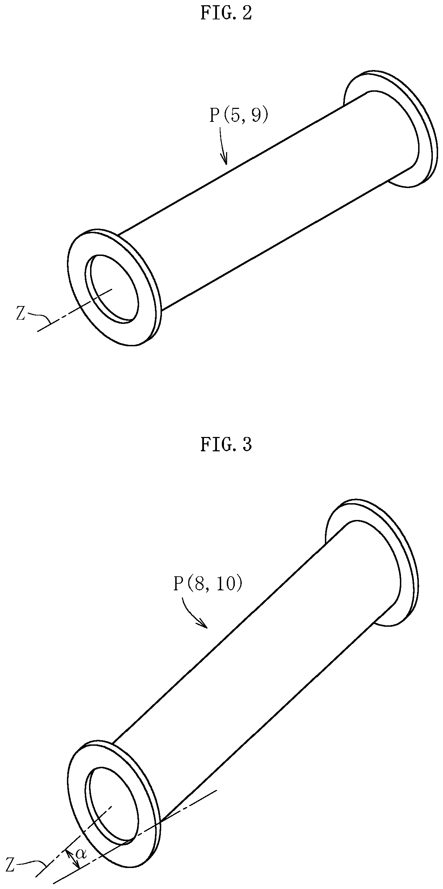

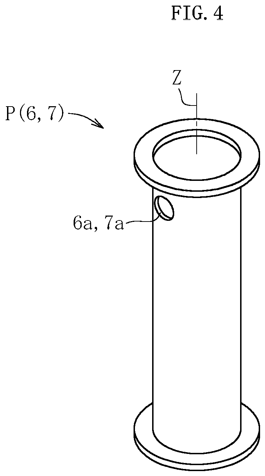

In the transfer device 3, each of the fining tank 5, the stirring tank 6, the state adjusting tank 7, the upstream connection pipe 8, the midstream connection pipe 9, and the cooling pipe 10 is formed of a transfer pipe P. Each of the fining tank 5, the stirring tank 6, the state adjusting tank 7, the upstream connection pipe 8, the midstream connection pipe 9, and the cooling pipe 10 may be formed by connecting a plurality of transfer pipes P. As illustrated in FIG. 2, a pipe axis Z of each of the transfer pipes P that form the fining tank 5 and the midstream connection pipe 9, respectively, extends in a lateral direction (preferably, a horizontal direction). A pipe axis Z of each of the transfer pipes P that form the upstream connection pipe 8 and the cooling pipe 10, respectively, is inclined upward (inclined at an angle a with respect to a horizontal plane) and toward a downstream side as illustrated in FIG. 3, but may be inclined downward. As illustrated in FIG. 4, a pipe axis Z of each of the transfer pipes P that form the stirring tank 6 and the state adjusting tank 7, respectively, extends in a longitudinal direction (preferably, a vertical direction) (in FIG. 4, the inflow portion 6a, 7a is illustrated).

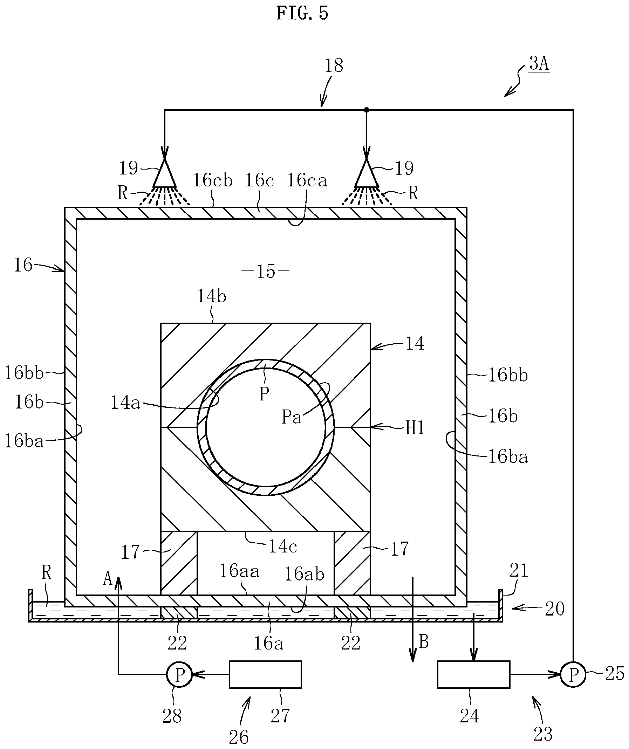

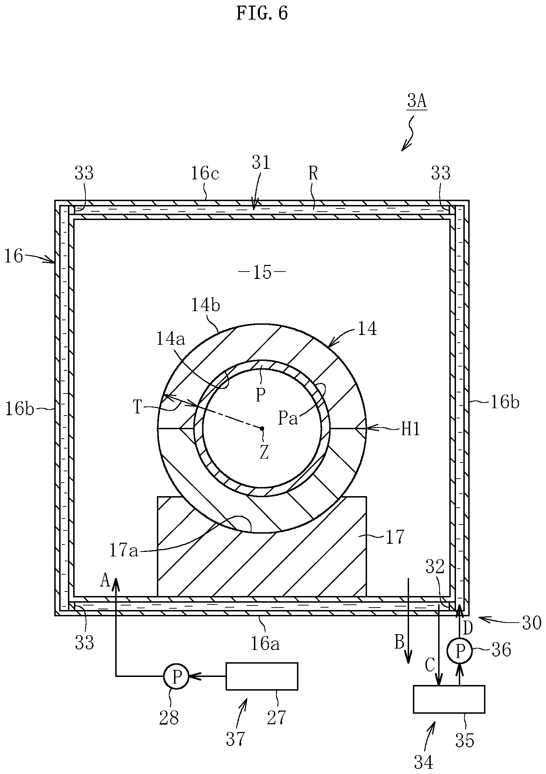

The transfer device 3 comprises peripheral facilities 3A for the transfer pipes P. The peripheral facilities 3A exemplified in FIG. 5 and FIG. 6 are each a peripheral facility for the transfer pipe P that forms the cooling pipe 10.

In FIG. 5, the peripheral facility 3A according to a first example for the transfer pipe P is illustrated. As illustrated in FIG. 5, the peripheral facility 3A comprises a retaining brick 14 and a casing 16. The retaining brick 14 is arranged on an outer peripheral side of the transfer pipe P. The casing 16 is arranged on an outer peripheral side of the retaining brick 14 with a space 15 defined therebetween. Thus, the transfer pipe P and the retaining brick 14 are accommodated inside the casing 16 with the space 15 defined between the retaining brick 14 and the casing 16. The casing 16 has a rectangular shape in cross section of FIG. 5. In the following description, a width direction of the casing 16 is simply referred to as "width direction", and a longitudinal direction of the casing 16 is simply referred to as "longitudinal direction". In cross section of FIG. 5, the retaining brick 14 comprises an inner surface 14a having a circular shape and an outer surface 14b having a rectangular shape. The inner surface 14a is in contact (partial contact or full contact) with an outer surface Pa of the transfer pipe P. Further, the retaining brick 14 surrounds the outer peripheral side of the transfer pipe P over its entire circumference. Further, the retaining brick 14 is supported on an inner surface 16aa of a bottom wall 16a of the casing 16 through intermediation of a plurality of (two in the illustrated example) support members 17. The two support members 17 support both end portions of a lower surface 14c of the retaining brick 14 in the width direction from below. A plurality of support members 17 are also arranged in the longitudinal direction so as to be spaced apart from each other. Thus, the space 15 is present in a continuous manner below the retaining brick 14. Thus, the space 15 surrounds the entire outer periphery of the retaining brick 14. The retaining brick 14 may be supported on inner surfaces 16ba of both side walls 16b and/or an inner surface 16ca of an upper wall 16c of the casing 16 through intermediation of support members (not shown). In this embodiment, the retaining brick 14 is divided at a height position H1 of a center portion of the transfer pipe P in an up-and-down direction.

Further, the peripheral facility 3A comprises a cooling device 18 according to the first example. The cooling device 18 is configured to cool the casing 16. The cooling device 18 comprises a plurality of (two in the illustrated example) nozzles 19 configured to eject cooling liquid R onto an outer surface 16cb of the upper wall 16c of the casing 16. As illustrated in FIG. 5, the nozzles 19 are arranged outside and above the casing 16 so as to be spaced apart from each other in the width direction. Although illustration is omitted, a plurality of nozzles 19 are also arranged in the longitudinal direction so as to be spaced apart from each other. For example, as illustrated in FIG. 5, those nozzles 19 are installed outside and above the casing 16. In place of or in combination with the nozzles 19, nozzles configured to eject the cooling liquid R to outer surfaces 16bb (preferably, upper parts of the outer surfaces 16bb) of the both side walls 16b of the casing 16, respectively, may be installed. In this case, the nozzles are installed, for example, outside the casing 16 so as to be located on both sides thereof. As the cooling liquid, for example, pure water, industrial water, tap water, or groundwater is used.

The cooling device 18 according to the first example further comprises a collecting device 20 configured to collect the cooling liquid R that has been ejected from the nozzles 19 onto the casing 16. The collecting device 20 comprises a receiving member 21 configured to receive the cooling liquid R flowing down on the outer surfaces 16bb of the both side walls 16b of the casing 16. The receiving member 21 is installed outside and below the casing 16. A plurality of (two in the illustrated example) spacers 22 are interposed between the receiving member 21 and an outer surface 16ab of the bottom wall 16a of the casing 16. A plurality of spacers 22 are also arranged in the longitudinal direction so as to be spaced apart from each other. The outer surface 16ab of the bottom wall 16a of the casing 16 is immersed in the cooling liquid R collected in the receiving member 21. A gap may be defined between the outer surface 16ab of the bottom wall 16a and the cooling liquid R collected in the receiving member 21 when, for example, the flow rate of the cooling liquid R is decreased.

The cooling device 18 according to the first example further comprises a circulating device 23 configured to circulate the cooling liquid R. The circulating device 23 comprises a cooling storage tank 24 and a pump 25. The cooling storage tank 24 is configured to store the cooling liquid R received in the receiving member 21 and cool the cooling liquid R again. The pump 25 is configured to pump the cooling liquid R stored in the cooling storage tank 24 to the nozzles 19.

The cooling device 18 according to the first example may comprise a plurality of nozzles configured to eject the cooling liquid R onto inner surfaces of the side walls 16b or an inner surface of the bottom wall 16a of the casing 16, in place of the plurality of nozzles 19 configured to eject the cooling liquid R onto an outer surface of the casing 16 or in addition to the nozzles 19 configured to eject the cooling liquid R onto the outer surface of the casing 16. In this case, the plurality of nozzles are also arranged in the longitudinal direction inside the casing 16 so as to be spaced apart from each other. It is preferred that the nozzles configured to cool the inner surfaces 16ba of the side walls 16b of the casing 16 be installed in an upper part inside the casing 16. The cooling liquid R flowing down on the inner surfaces 16ba of the side walls 16b may be discharged from an outflow port formed in the bottom wall 16a, which is described later, together with gas.

The peripheral facility 3A according to the first example for the transfer pipe P further comprises, in addition to the configurations described above, a gas supply/discharge device 26 configured to supply and discharge gas into and from the space 15 defined between the casing 16 and the retaining brick 14. The gas supply/discharge device 26 supplies gas (cooling gas) into the space 15 through an inflow port (not shown) formed in the bottom wall 16a of the casing 16 as indicated by the arrow A. Then, after being allowed to flow through the space 15, the gas is discharged from an outflow port (not shown) formed in the bottom wall 16a of the casing 16 as indicated by the arrow B. In this case, the gas is pumped from a gas source 27 into the inflow port of the casing 16 by a pump 28. Thus, the gas is supplied into the space 15, is allowed to flow through the space 15, and is discharged from the space 15. As the gas, for example, air, clean dry air, nitrogen, or water steam is used. The inflow port and the outflow port may be formed at other positions as long as the gas can be allowed to flow through the space 15. Further, an air blower may be used in place of the pump 28.

With the peripheral facility 3A having the configurations described above according to the first example for the transfer pipe P, the cooling liquid R ejected from the nozzles 19 flows down while cooling the upper wall 16c and the both side walls 16b of the casing 16 and is received in the receiving member 21. The bottom wall 16a of the casing 16 is cooled with the cooling liquid R received in the receiving member 21. The cooling liquid R received in the receiving member 21 is collected in the cooling storage tank 24 and is cooled again. Then, the cooling liquid R, which has been cooled again, is pumped to the nozzles 19 by the pump 25. Thus, the cooling liquid R is circulated. When the above-mentioned operation is performed at the time of manufacture of a glass article, the following actions and effects are obtained. Specifically, when the casing 16 is cooled with the cooling liquid R ejected from the nozzles 19, the space 15, the retaining brick 14, and the transfer pipe P are cooled to thereby also cool the molten glass Gm inside the transfer pipe P. Thus, cooling efficiency for the molten glass Gm is improved to thereby reduce time for achieving, for example, an appropriate viscosity for the molten glass Gm. In this embodiment, the transfer pipe P forms the cooling pipe 10. Thus, for example, the viscosity of the molten glass Gm can be increased to a viscosity suitable for forming a glass article within a short period of time. As a result, cooling capacity can be ensured while suppressing an increase in length of the transfer pipe P. Thus, a flow rate of the molten glass Gm transferred through the transfer pipe P can be efficiently increased, and hence improvement in productivity of glass articles is achieved. In addition, the space 15 defined between the casing 16 and the retaining brick 14 can mitigate an influence of a change in outside temperature on the molten glass Gm inside the transfer pipe P. Further, the presence of the space 15 enables uniform cooling of the retaining brick 14 and the transfer pipe P. Further, the peripheral facility 3A comprises the collecting device 20 and the circulating device 23. Thus, the amount of use of the cooling liquid R can be reduced so as to prevent wasteful use of the cooling liquid. In addition, when the peripheral facility 3A comprises the gas supply/discharge device 26, the following actions and effects are obtained at the time of manufacture of a glass article. Specifically, the retaining brick 14 and the transfer pipe P can also be cooled with the gas supplied into and discharged from the space 15 by the gas supply/discharge device 26 so as to cool the molten glass Gm inside the transfer pipe P. Thus, a synergistic effect in combination with the cooling of the casing 16 can remarkably increase the cooling efficiency to thereby achieve further improvement in productivity.

In FIG. 6, a peripheral facility 3A according to a second example for the transfer pipe P is illustrated. As illustrated in FIG. 6, similarly to the above-mentioned peripheral facility 3A according to the first example, the transfer pipe P and a retaining brick 14 are accommodated in a casing 16 with a space 15 defined between the retaining brick 14 and the casing 16, and the retaining brick 14 is supported by a support member 17 from below in the peripheral facility 3A. In cross section of FIG. 6, each of an inner surface 14a and an outer surface 14b of the retaining brick 14 has a circular shape coaxial with the transfer pipe P. The outer surface 14b of the retaining brick 14 is not required to have a circular shape, and may have a polygonal shape with, for example, five or more angles. The support member 17 is illustrated as a single member having a recessed portion 17a with a circular shape. The recessed portion 17a is formed in the top of the support member 17 and receives the transfer pipe P. Actually, a plurality of support members 17 are installed so as to be spaced apart from each other in the longitudinal direction. A state in which the retaining brick 14 is fitted over the transfer pipe P, a state in which the space 15 is present around the retaining brick 14, and the like are the same as those described above for the peripheral facility 3A according to the first example. Thus, components common to both of the peripheral facilities 3A are denoted by the same reference symbols in FIG. 6, and the description thereof is omitted here.

Further, the peripheral facility 3A comprises a cooling device 30 according to the second example. The cooling device 30 is configured to cool the casing 16. The cooling device 30 comprises a cooling flow passage 31. The cooling flow passage 31 is provided in the casing 16, and cooling liquid R flows through the cooling flow passage 31. In the illustrated example, the cooling flow passage 31 is provided inside an upper wall 16c, both side walls 16b, and a bottom wall 16a of the casing 16. A partition member 32 is provided at one end portion (right end portion) of the bottom wall 16a in the width direction. The partition member 32 is a single member extending continuously in the longitudinal direction. Meanwhile, reinforcing members 33 are provided at another end portion (left end portion) of the bottom wall 16a in the width direction and both end portions of the upper wall 16c in the width direction, respectively. A plurality of the reinforcing members 33 are present in the longitudinal direction so as to be spaced apart from each other. Thus, the cooling flow passage 31 is partitioned by the partition member 32 but is otherwise continuous.

The cooling device 30 according to the second example further comprises a liquid supply/discharge device 34 configured to supply and discharge the cooling liquid R to and from the cooling flow passage 31. The liquid supply/discharge device 34 also serves as a circulating device configured to circulate the cooling liquid R through the cooling flow passage 31. The liquid supply/discharge device 34 comprises a cooling storage tank 35 and a pump 36. The cooling storage tank 35 is configured to store and cool again the cooling liquid R flowing out from an outflow port (not shown) of the cooling flow passage 31 as indicated by the arrow C. The pump 36 is configured to pump the cooling liquid R stored in the cooling storage tank 35 to an outflow port (not shown) of the cooling flow passage 31 as indicated by the arrow D. The inflow port is arranged at one end portion (right end portion) of the bottom wall 16a in the width direction so as to be located on one side (right side) of the partition member 32. The outflow port is arranged at the one end portion (right end portion) of the bottom wall 16a in the width direction so as to be located on another side (left side) of the partition member 32.

In addition to the configurations described above, the peripheral facility 3A according to the second example for the transfer pipe P further comprises a gas supply/discharge device 37 configured to supply and discharge gas into and from the space 15 defined between the casing 16 and the retaining brick 14. The gas supply/discharge device 37 has the same configuration as that of the gas supply/discharge device 26 of the peripheral facility 3A according to the first example. Thus, components common to both of the gas supply/discharge devices 26 and 37 are denoted by the same reference symbols in FIG. 6, and the description thereof is omitted here.

With the peripheral facility 3A having the configurations described above according to the second example for the transfer pipe P, the cooling liquid R that is pumped from the cooling storage tank 35 into the inflow port of the cooling flow passage 31 by the pump 36 flows inside the right side wall 16b, the upper wall 16c, the left side wall 16b, and the bottom wall 16a of the casing 16. Thus, after cooling the casing 16 entirely, the cooling liquid R flowing out from the outflow port of the cooling flow passage 31 is collected in the cooling storage tank 35. After being cooled again in the cooling storage tank 35, the collected cooling liquid R is pumped into the inflow port of the cooling flow passage 31 by the pump 36 again. Actions and effects obtained through the above-mentioned operation performed at the time of manufacture of a glass article are substantially the same as the actions and effects that have already been described for the peripheral facility 3A according to the first example. In the peripheral facility 3A according to the second example, the casing 16 itself comprises the cooling flow passage 31 through which the cooling liquid R is supplied and discharged. Thus, the peripheral facility 3A according to the second example has a more excellent cooling effect for the casing 16 than that of the peripheral facility 3A according to the first example. Thus, the cooling efficiency for the molten glass Gm inside the transfer pipe P can be further enhanced. Further, a thickness of the retaining brick 24 of the peripheral facility 3A according to the second example is set so as to be equal over its entire circumference as compared to a thickness of the retaining brick 14 of the peripheral facility 3A according to the first example. Thus, the transfer pipe P and the molten glass Gm can be further uniformly cooled.

The molten glass transfer device, the manufacturing apparatus for a glass article, and the method of manufacturing a glass article according to the embodiment of the present invention have been described. However, the embodiment of the present invention is not limited to that described above. Various changes are possible without departing from the gist of the present invention.

For example, a glass sheet is formed of molten glass in the embodiment described above. Besides, other glass articles such as a glass tube and glass fiber may be formed.

The present invention has been applied to the peripheral facility for the transfer pipe that forms the cooling pipe in the embodiment described above. When there is a request for increasing cooling efficiency for molten glass inside another transfer pipe, the present invention may also be applied to a peripheral facility for the another transfer pipe. For example, the present invention may be applied to a peripheral facility for the midstream connection pipe 9 that connects the outflow portion 5b of the fining tank 5 and the inflow portion 6a of the stirring tank 6 to each other.

The peripheral facility according to the first example for the transfer pipe and the peripheral facility according to the second example for the transfer pipe are provided separately in the embodiment described above. However, both of the facilities may be used in combination.

In the embodiment described above, the cooling flow passage is provided inside the upper wall, the bottom wall, and both side walls of the casing in the peripheral facility according to the second example for the transfer pipe. However, the cooling flow passage is not required to be provided inside all the walls. For example, a variation in which the cooling flow passage is not provided inside the upper wall and/or the bottom wall is possible. Further, the partition member in the cooling flow passage and the inflow port and the outflow port of the cooling flow passage may be arranged at other positions. Further, the number of inflow ports and the number of outflow ports may be changed. For example, one or a plurality of inflow ports and outflow ports may be formed in each of the upper wall, the bottom wall, and the both side walls of the casing.

### Reference Signs List

1 manufacturing apparatus for glass article
3 molten glass transfer device
3A peripheral facility for transfer pipe
4 forming device
6a inflow portion
14 retaining brick
15 space
16 casing
16a bottom wall
16b right side wall
16b left side wall
16c upper wall
18 cooling device
19 nozzle
20 collecting device
23 circulating device
24 retaining brick
26 gas supply/discharge device
30 cooling device
31 cooling flow passage
34 liquid supply/discharge device
35 cooling storage tank
37 gas supply/discharge device
Gm molten glass
P transfer pipe
R cooling liquid

## Claims

1. A molten glass transfer device, comprising:
a transfer pipe through which molten glass flows;
a retaining brick, which is arranged on an outer peripheral side of the transfer pipe, and retains the transfer pipe; and
a casing, which accommodates the transfer pipe and the retaining brick, and includes a space defined by the retaining brick,
wherein a cooling device configured to cool the casing is provided.

2. The molten glass transfer device according to claim 1, wherein the cooling device comprises a nozzle configured to eject cooling liquid to the casing.

3. The molten glass transfer device according to claim 2, wherein the cooling device comprises a collecting device configured to collect the cooling liquid ejected to the casing.

4. The molten glass transfer device according to any one of claims 1 to 3, wherein the cooling device comprises a cooling flow passage provided in the casing, through which the cooling liquid flows, and a liquid supply/discharge device configured to supply and discharge the cooling liquid to and from the cooling flow passage.

5. The molten glass transfer device according to any one of claims 1 to 4, further comprising a gas supply/discharge device configured to supply and discharge gas into and from the space.

6. A manufacturing apparatus for a glass article, the apparatus comprising a forming device configured to form a glass article from molten glass transferred by the molten glass transfer device of any one of claims 1 to 5.

7. A method of manufacturing a glass article, the method comprising a forming step of forming a glass article from molten glass transferred by the molten glass transfer device of any one of claims 1 to 5.
